# EUROPÄISCHE PATENTSCHRIFT

(11) **EP 4 133 198 B1**
(45) Veröffentlichungstag und Bekanntmachung des Hinweises auf die Patenterteilung: **27.08.2025**
(21) Anmeldenummer: 21707986.2
(22) Anmeldetag: 24.02.2021
(51) Int. Cl.: F16K 11/07, F16K 27/04, F16K 11/044, F16K 27/02, F16K 31/524

(54) **UMSTELLVORRICHTUNG**
SWITCHOVER DEVICE
DISPOSITIF DE COMMUTATION

(30) Priorität: 09.04.2020 DE 202020101989 U
(43) Veröffentlichungstag der Anmeldung: 15.02.2023
(73) Patentinhaber: Neoperl GmbH, 79379 Müllheim (DE)
(72) Erfinder: BIAN, Yichao, 79379 Müllheim (DE)
(74) Vertreter: Mertzlufft-Paufler, Cornelius
(86) Internationale Anmeldenummer: PCT/EP2021/054574
(87) Internationale Veröffentlichungsnummer: WO 2021/204459

(56) Entgegenhaltungen:
- EP-A1- 0 325 099
- EP-A1- 2 746 628
- CN-A- 105 370 924
- CN-A- 110 762 248
- DE-A1- 102016 000 917
- DE-U1- 29 610 340
- DE-U1- 7 716 688
- US-A- 4 234 162
- US-A- 4 450 869

## Beschreibung

Die Erfindung betrifft eine Umstellvorrichtung zum selektiven Verbinden einer ersten Öffnung mit einer zweiten Öffnung, die Umstellvorrichtung umfassend einen Kolben und einen Kolbenraum zur Aufnahme des Kolbens, der Kolbenraum umfassend zumindest die erste Öffnung, wobei der Kolben eine Dichtvorrichtung, vorzugsweise eine Dichtscheibe, umfasst, die an der ersten Öffnung vorbei bewegbar ist.

Derartige Umstellvorrichtung kommen beispielsweise in sanitären Auslaufarmaturen zum Einsatz, bei welchen ein gemeinsamer Zulauf selektiv mit einem ersten Ablauf oder einem zweiten Ablauf verbindbar ist. Oftmals mündet der erste Ablauf in einen festen Auslauf, beispielsweise in einer Badewanne, und der zweite Ablauf in einer Brause. Dabei wird in der Regel häufig zwischen den beiden auswählbaren Verbindungen umgeschaltet. Hierdurch tritt ein Verschleiß der von der Umstellvorrichtung umfassten Bauteile auf.

In der EP 2 746 628 A1 ist ein elektromagnetisch betätigtes modulares Ventil beschrieben. Die DE 10 2016 000917 A1 beschreibt einen Umsteller für eine Sanitärarmatur. In der DE 77 16 688 U1 ist ferner eine Umstellvorrichtung von einem Brauselauf zu einem Wannenlauf.

Die EP 0325099 A1 beschreibt eine Umschaltvorrichtung für sanitäre Armaturen mit mehreren Wasserentnahmestellen bei der die das Absperrelement betätigende Spindel eine Stauscheibe und einen Ventilkegel trägt, der beweglich gehalten ist. Am Eingangsbereich jeder Leitung zu einer Wasserentnahmestelle ist ein dem Ventilkegel angepasster Ventilsitz vorgesehen.

Der Erfindung liegt die Aufgabe zu Grunde, den durch die Verwendung der Umstellvorrichtung verursachten Verschleiß zu verringern und damit die Lebensdauer der Umstellvorrichtung zu verlängern.

Zur Lösung der genannten Aufgabe werden erfindungsgemäß die Merkmale von Anspruch 1 vorgeschlagen. Insbesondere wird somit erfindungsgemäß bei einer Umstellvorrichtung der eingangs beschriebenen Art vorgeschlagen, dass der Kolbenraum in einem Kolbenraumabschnitt eine Aufweitung eines lichten Innenmaßes, insbesondere eines Innendurchmessers, des Kolbenraums aufweist.

Der Erfindung liegt die Erkenntnis zugrunde, dass durch die Bewegung der Dichtvorrichtung innerhalb des Kolbenraumabschnitts die Dichtvorrichtung und die Innenwand des Kolbenraumabschnitts Reibungskräften ausgesetzt sind. Hierdurch tritt Verschleiß auf. Durch das Vorsehen einer Aufweitung eines lichten Innenmaßes kann erreicht werden, dass die Dichtvorrichtung nur in denjenigen Unterabschnitten des Kolbenraums mit der Innenwand des Kolbenraumabschnitts in Kontakt, bzw. in einen die Dichtfunktion erfüllenden Kontakt, tritt, in der die Dichtfunktion für die Funktion der Umstellvorrichtung notwendig ist. In den übrigen Unterabschnitten tritt die Dichtvorrichtung bei einer Bewegung der Dichtvorrichtung nicht in Kontakt, bzw. nicht in einen die Dichtfunktion erfüllenden Kontakt, mit der Innenwand des Kolbenraumabschnitts. Somit wird der Verschleiß der Umstellvorrichtung verringert und deren Lebensdauer verlängert.

Das lichte Innenmaß kann beispielsweise dadurch gegeben sein, dass es eine Abmessung des Kolbenraums quer zu einer Bewegungsrichtung des Kolbens charakterisiert. Beispielsweise kann das lichte Innenmaß ein lichter Innendurchmesser, insbesondere ein maximaler, minimaler oder mittlerer Innendurchmesser bei einem unrunden Querschnitt oder der Innendurchmesser bei einem zylindrischen Kolbenraum, sein.

Die Umstellvorrichtung weist eine dritte Öffnung auf, sie kann sogar weitere Öffnungen aufweisen, die wahlweise oder gemeinsam mit der ersten Öffnung und/oder der zweiten Öffnung fluidisch verbindbar ist/sind.

Bei einer vorteilhaften Ausgestaltung kann vorgesehen sein, dass der Kolbenraumabschnitt die erste Öffnung umfasst. Somit ist eine lichte Innenabmessung im Bereich der ersten Öffnung vergrößert, um eine Kontaktierung der ersten Öffnung durch die Dichtvorrichtung sicher vermeiden zu können. Die Aufweitung sollte hierbei am besten außerhalb der ersten Öffnung ansetzen. Die Aufweitung kann beispielsweise vollständig außerhalb der ersten Öffnung oder teilweise in einen Bereich der ersten Öffnung hineinragend ausgebildet sein.

Erfindungsgemäß ist vorgesehen, dass der Kolbenraumabschnitt eine Verengung des aufgeweiteten lichten Innenmaßes aufweist, wobei die erste Öffnung vorzugsweise zwischen der Aufweitung und der Verengung angeordnet ist. Somit ist in einer Bewegungsrichtung hinter der ersten Öffnung ein dichter Abschluss durch die Dichtvorrichtung erreichbar.

Bei einer vorteilhaften Ausgestaltung kann vorgesehen sein, dass der Kolbenraum vor und hinter dem Kolbenraumabschnitt das lichte Innenmaß aufweist. Somit ist ein dichter Abschluss der Dichtvorrichtung jenseits der ersten Öffnung erreichbar. Mit anderen Worten, die Verengung des aufgeweiteten Innenmaßes ist zur Aufweitung des Innenmaßes gegensätzlich ausgebildet. Die Verengung kehrt somit die Aufweitung um oder macht sie rückgängig.

Hierdurch wird außerdem ein bei der Bewegung der Dichtvorrichtung, vorbei an der Umlaufkante bzw. Begrenzung der ersten Öffnung, wo die Abrieb- und Reibungskräfte besonders hoch sind, auftretender Verschleiß der Umstellvorrichtung, insbesondere der Dichtvorrichtung verringert.

Erfindungsgemäß ist vorgesehen, dass die Dichtvorrichtung einen elastischen Dichtring, vorzugsweise einen elastischen O-Ring umfasst.

Der elastische Dichtring verringert den durch Reibungskräfte zwischen der Innenwand des Kolbenraums und dem Kolben entstehenden Verschleiß. Zudem tritt der verursachte Verschleiß durch die Elastizität des Dichtrings hauptsächlich am Dichtring auf. Dieser ist einfach austauschbar. Damit kann die Lebensdauer der Umstellvorrichtung weiter verlängert werden.

Erfindungsgemäß ist in einer ersten Position der Dichtvorrichtung die erste Öffnung von der zweiten Öffnung fluidisch getrennt und in einer zweiten Position der Dichtvorrichtung ist die erste Öffnung mit der zweiten Öffnung fluidisch verbunden, und in der ersten Position der Dichtvorrichtung ist die erste Öffnung mit einer dritten Öffnung fluidisch verbunden und in der zweiten Position der Dichtvorrichtung ist die erste Öffnung von der dritten Öffnung fluidisch getrennt ist.

Beispielsweise liegt die erste Position der Dichtvorrichtung zwischen der ersten und der zweiten Öffnung und die zweite Position der Dichtvorrichtung zwischen der ersten und der dritten Öffnung. Zur Umstellung zwischen der Verbindung der ersten mit der zweiten Öffnung und der Verbindung der ersten mit der dritten Öffnung ist somit nur eine Bewegung der Dichtvorrichtung an der ersten Öffnung vorbei notwendig. Der Verschleiß der Dichtvorrichtung wird durch die geringe Bewegung der Dichtvorrichtung ebenfalls geringgehalten, insbesondere dann, wenn der Kolbenraumabschnitt die erste Öffnung umfasst.

Bei einer vorteilhaften Ausgestaltung kann vorgesehen sein, dass sich das lichte Innenmaß des Kolbenraums innerhalb des Kolbenraumabschnitts gleichmäßig, insbesondere kontinuierlich, ändert.

Hierdurch wird ein unstetiger Übergang zwischen dem lichten Innenmaß und dem aufgeweiteten lichten Innenmaß verhindert. An einem solchen Übergang könnten besonders hohe Abrieb- und Reibungskräfte auftreten.

Erfindungsgemäß ist vorgesehen, dass der Kolbenraum einen ersten Kolbenraumteil und einen mit dem ersten Kolbenraumteil zusammenfügbaren oder zusammengefügten zweiten Kolbenraumteil umfasst. Erfindungsgemäß ist vorgesehen, dass der erste Kolbenraumteil und der zweite Kolbenraumteil den Kolbenraumabschnitt jeweils teilweise umfassen.

Bei einer vorteilhaften Ausgestaltung kann vorgesehen sein, dass der erste Kolbenraumteil oder der zweite Kolbenraumteil die erste Öffnung zumindest teilweise umfasst, oder der erste Kolbenraumteil und der zweite Kolbenraumteil die erste Öffnung jeweils teilweise umfassen.

Durch die Fertigung zweier separater Zylinderteile können insbesondere die Übergänge zwischen dem lichten Innenmaß und dem aufgeweiteten lichten Innenmaß mit hoher Präzession hergestellt und somit geringe Abrieb- und Reibungskräfte zwischen dem Kolben und dem Kolbenraum gewährleistet werden.

Erfindungsgemäß ist vorgesehen, dass die Aufweitung an dem ersten Kolbenraumteil ausgebildet ist. Von Vorteil ist dabei, dass die Aufweitung hinterschnittfrei einbringbar ist, was die Fertigung vereinfacht.

Erfindungsgemäß ist vorgesehen, dass die Verengung an dem zweiten Kolbenraumteil ausgebildet ist. Von Vorteil ist dabei, dass auch die Verengung hinterschnittfrei einbringbar ist, was die Fertigung vereinfacht.

Günstig ist es demnach, insbesondere für die Fertigung der Umstellvorrichtung, wenn eine Trennstelle, an der der erste Kolbenraumteil mit dem zweiten Kolbenraumteil zusammengefügt ist, zwischen der Aufweitung und der Verengung liegt.

Bei einer vorteilhaften Ausgestaltung kann vorgesehen sein, dass der erste Kolbenraumteil eine Hülse zur Aufnahme des zweiten Kolbenraumteils umfasst, insbesondere wobei die Hülse die Aufweitung begrenzt.

Insbesondere kann hierbei vorgesehen sein, dass die Hülse an der bereits erwähnten dritten Öffnung vorbeigeführt ist und/oder an der dritten Öffnung offen und eine Durchlassöffnung ausgeführt ist. Die Einsteckhülse bildet somit den Auslass.

Bei einer vorteilhaften Ausgestaltung kann vorgesehen sein, dass, der erste Kolbenraumteil und der zweite Kolbenraumteil jeweils zumindest ein Verbindungselement umfassen zur, insbesondere lösbaren, Verbindung des ersten Kolbenraumteils mit dem zweiten Kolbenraumteil, wobei die zumindest einen Verbindungselemente außerhalb des Kolbenraumabschnitts liegen. Mit anderen Worten, die Verbindungselemente und sind außerhalb eines Bereiches angeordnet, der von der Aufweitung und der Verengung begrenzt wird.

Dies hat den Vorteil, dass die erste Öffnung von den Verbindungselementen räumlich getrennt ausgebildet ist. Hierdurch kann eine besonders druckfeste Verbindung hergestellt werden. Dadurch wird gewährleistet, dass die Umstellvorrichtung an der mit einem Zulauf verbindbaren ersten Öffnung hohen Drücken standhält.

Die Erfindung wird nun anhand von Ausführungsbeispielen näher beschrieben, ist aber nicht auf diese Ausführungsbeispiele beschränkt. Weitere Ausführungsbeispiele ergeben sich durch Kombination der Merkmale einzelner oder mehrerer Ansprüche untereinander und/oder mit einzelnen oder mehreren Merkmalen der Ausführungsbeispiele.

Es zeigt in schematischen Darstellungen:
- Fig. 1: eine bistabile Umstellvorrichtung gemäß einem ersten Ausführungsbeispiel mit einem Kolben in einer ersten Position,
- Fig. 2: die bistabile Umstellvorrichtung gemäß dem ersten Ausführungsbeispiel mit dem Kolben in einer zweiten Position,
- Fig. 3: ein Umstellsystem umfassend die bistabile Umstellvorrichtung gemäß dem ersten Ausführungsbeispiel mit dem Kolben in der ersten Position,
- Fig. 4: das Umstellsystem umfassend die bistabile Umstellvorrichtung gemäß dem ersten\ Ausführungsbeispiel mit dem Kolben in der zweiten Position,
- Fig. 5: eine räumliche Darstellung und eine Explosionsdarstellung der Umstellvorrichtung gemäß dem ersten Ausführungsbeispiel,
- Fig. 6: eine monostabile Umstellvorrichtung gemäß einem zweiten Ausführungsbeispiel mit einem Kolben in einer ersten Position,
- Fig. 7: eine räumliche Darstellung und eine Explosionsdarstellung der Umstellvorrichtung gemäß dem zweiten Ausführungsbeispiel,
- Fig. 8: eine monostabile Umstellvorrichtung gemäß einem dritten Ausführungsbeispiel mit einem Kolben in einer ersten Position,
- Fig. 9: eine räumliche Darstellung und eine Explosionsdarstellung der Umstellvorrichtung gemäß dem dritten Ausführungsbeispiel.

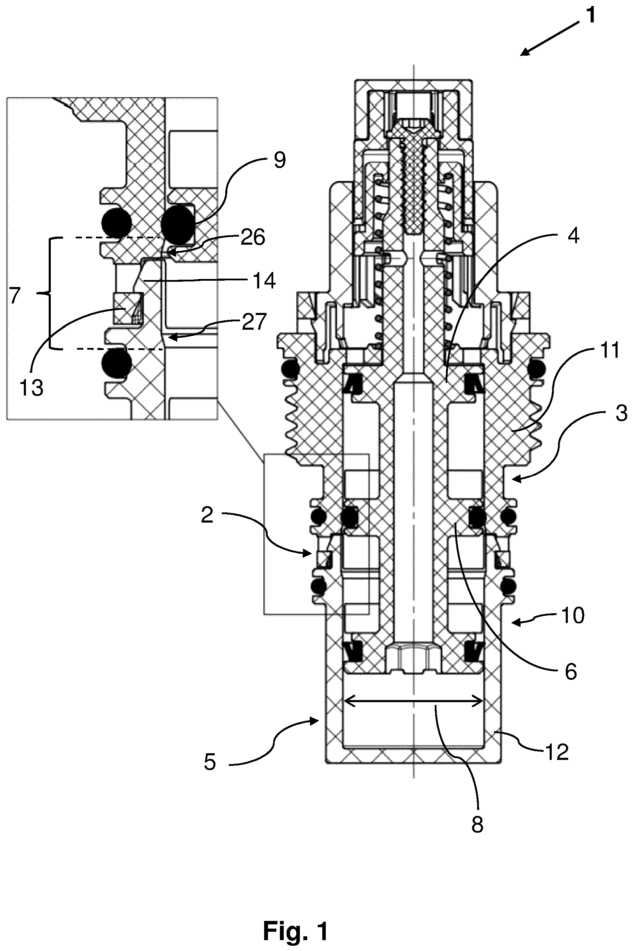

Fig. 1 zeigt eine mit 1 bezeichnete bistabile Umstellvorrichtung gemäß einem ersten Ausführungsbeispiel. Die Umstellvorrichtung 1 weist eine erste Öffnung 2 auf, die beispielsweise mit einem Zulauf verbindbar ist. Die Umstellvorrichtung 1 weist eine zweite Öffnung 3 auf, die beispielsweise mit einem ersten Ablauf verbindbar ist. Ferner weist die Umstellvorrichtung 1 eine dritten Öffnung 10 auf, die beispielsweise mit einem zweiten Ablauf verbindbar ist. Alternativ kann beispielsweise die erste Öffnung 3 mit einem Ablauf, die zweite Öffnung 3 mit einem ersten Zulauf und die dritte Öffnung 10 mit einem zweiten Zulauf verbindbar sein.

Die Umstellvorrichtung 1 umfasst einen Kolben 4. Der Kolben 4 ist von einem Kolbenraum 5 aufgenommen. Der Kolbenraum 5 umfasst die erste, zweite und dritte Öffnung 2, 3 und 10. Der Kolbenraum 5 ist beispielsweise ein Kolbenzylinder mit kreisrunder Grundfläche. Die Grundfläche des Kolbenraums kann ebenso beispielsweise als Ellipse oder Vieleck ausgestaltet sein.

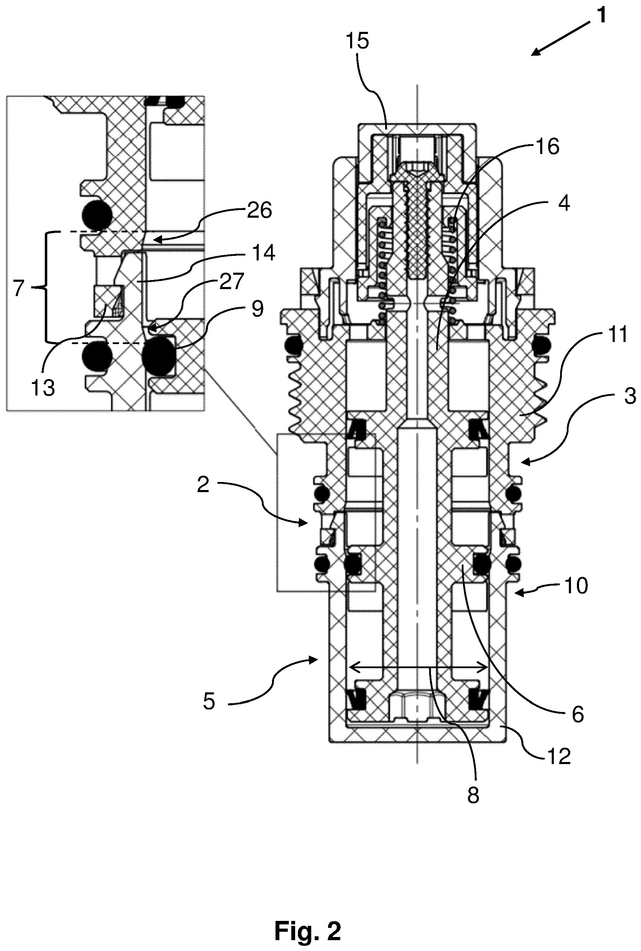

Der Kolben 4 ist innerhalb des Kolbenraums 5 bewegbar. Der Kolben 4 ist entlang einer Längsachse des Kolbenraums 5 translatorisch bewegbar. Die Bewegung des Kolbens 4 innerhalb des Kolbenraums 5 ist durch eine obere und eine untere Seitenwand sowie durch einen Kolbenraummantel beschränkt. Der Kolben 4 ist nur entlang der Längsachse, insbesondere aus einer ersten Position in eine zweite Position, bewegbar. Fig. 1 zeigt den Kolben 4 in der ersten Position. Fig. 2 zeigt den Kolben in der zweiten Position.

Der Kolben 4 umfasst eine Dichtvorrichtung 6, die als Dichtscheibe bzw. Dichtlochscheibe um eine Längsachse des Kolbens 4 ausgebildet sein kann. Die Dichtvorrichtung 6 umfasst einen elastischen Dichtring 9. Die Dichtvorrichtung 6 bzw. der Dichtring 9 sind beispielsweise kreisförmig, ellipsenförmig oder vieleckig ausgebildet. Der elastische Dichtring 9 ist in der dargestellten ersten Position des Kolbens 4 in Kontakt mit der Innenwand des Kolbens bzw. mit dem Kolbenraummantel. Dies insbesondere deshalb, weil ein Außenmaß, hier ein Außendurchmesser, des von der Dichtvorrichtung 6 umfassten elastischen Dichtrings 9 größer ist als ein lichtes Innenmaß, hier der lichte Innendurchmesser, 8 des Kolbenraums 5. Durch den die Dichtfunktion erfüllenden Kontakt wird der elastische Dichtring 9 verformt und/oder komprimiert.

Der Kolbenraum 5 umfasst einen Kolbenraumabschnitt 7, der eine Aufweitung 26 des Innenmaßes aufweist. Der Kolbenraumabschnitt 7 weist ferner eine Verengung 27 des aufgeweiteten Innenmaßes auf. Die Aufweitung 26 und die Verengung 27 können als stufenförmig oder gleichmäßig verlaufende Aufweitung bzw. Verengung ausgebildet sein. Die Verengung 27 ist gegenteilig zur Aufweitung 26 ausgebildet. Die Verengung 27 kehrt die Aufweitung 26 um bzw. macht sie rückgängig. Die Dichtvorrichtung 6, insbesondere der elastische Dichtring 9, ist über die Aufweitung 26 und über die Verengung 27 hinweg bewegbar, insbesondere über den Kolbenraumabschnitt 7 hinweg bewegbar.

Im dargestellten Ausführungsbeispiel ist das aufgeweitete Innenmaß zwischen der Aufweitung 26 und der Verengung 27 konstant. Der Kolbenraumabschnitt 7 umfasst demnach einen aufgeweiteten Abschnitt, in dem das lichte Innenmaß des Kolbenabschnitts 7 im Wesentlichen unverändert bleibt, d.h. konstant ist.

Mit anderen Worten: Der Kolbenraum 5 umfasst einen ersten Unterabschnitt und einen zweiten Unterabschnitt, wobei der erste Unterabschnitt vor und/oder hinter dem zweiten Unterabschnitt angeordnet ist und der zweite Unterabschnitt zwischen der Aufweitung 26 und der Verengung 27 angeordnet ist, und wobei der erste Unterabschnitt ein, insbesondere konstantes, erstes lichtes Innenmaß aufweist und der zweite Unterabschnitt ein, insbesondere konstantes, zweites lichtes Innenmaß aufweist, und wobei das erste lichte Innenmaß kleiner ist als das zweite lichte Innenmaß.

Nochmals anders ausgedrückt: Der Kolbenabschnitt 7 umfasst zwei am Rand des Kolbenabschnitts 7 ausgebildete Übergangsabschnitte, wobei sich das Innenmaß, insbesondere der Innendurchmesser der Übergangsabschnitte vom lichten Innenmaß des Kolbenabschnitts 7 zum lichten Innenmaß des Kolbenraums 5, bzw. umgekehrt, kontinuierlich ändert. Alternativ kann sich das lichte Innenmaß des Kolbenabschnitts 7 kontinuierlich von einem kleinsten Wert zu einem größten Wert, und umgekehrt, ändern, insbesondere ohne, dass der Kolbenabschnitt 7 einen aufgeweiteten Abschnitt mit konstantem lichtem Innenmaß aufweist.

Der Kolbenraumabschnitt 7 umfasst in der gezeigten Umstellvorrichtung 1 die erste Öffnung 2. Die erste Öffnung 2 ist von dem aufgeweiteten Abschnitt des Kolbenraumabschnitts 7 sein. Ebenfalls kann die Aufweitung 26 und/oder die Verengung 27 in die Öffnung hineinragen oder in Bewegungsrichtung des Kolbens 4 vor bzw. hinter der Öffnung angeordnet sein.

Wird die Dichtvorrichtung 6 an der ersten Öffnung 2 vorbei bewegt, beispielsweise der Kolben 4 in die zweite Position bewegt (siehe Fig. 2), so wird der elastische Dichtring 9 weniger stark verformt und/oder komprimiert, solange er sich in dem Kolbenraumabschnitt 7, insbesondere auf Höhe des aufgeweiteten lichten Innenmaßes des Kolbenabschnitts 7 befindet. Das aufgeweitete lichte Innenmaß im Kolbenabschnitt 7 kann größer als das Außenmaß, hier als der Außendurchmesser des von der Dichtvorrichtung 6 umfassten elastischen Dichtrings 9 sein. Derart tritt der elastische Dichtring 9 zumindest in Teilen des Kolbenabschnitts 7 nicht in Kontakt oder in abgeschwächten Kontakt mit der Innenwand des Kolbenraums 5. Der elastische Dichtring 9 gleitet oder "fliegt" folglich an dem Kolbenabschnitt 7, insbesondere an der ersten Öffnung 2, vorbei, ohne oder nahezu ohne, dass zwischen dem Dichtring 9 und der Innenwand des Kolbenraums 5 Reibung auftritt.

Auf diese Weise verringert sich der durch Reibung verursachte Verschleiß des Dichtrings 9 und und/oder des Kolbenraums 5. Darüber hinaus ist die Bewegung der Dichtvorrichtung 6 über den Kolbenabschnitt 7 hinweg, insbesondere aus der ersten Position in die zweite Position des Kolbens 4, und umgekehrt, durch die verringerte Reibungskraft mit weniger Kraftaufwand möglich. Die Umstellvorrichtung 1 ist damit zum einen langlebiger und zum anderen leichter zu betätigen.

Fig. 2 zeigt die mit 1 bezeichnete Umstellvorrichtung aus Fig. 1. Gleiche Merkmale sind mit gleichen Bezugszeichen versehen. In der in Fig. 2 dargestellten Umstellvorrichtung 1 befindet sich der Kolben 4 in der zweiten Position. Die obige beschriebenen erste und zweite Position des Kolbens 4 sind insbesondere erste und zweite Anschlagspositionen, wobei die erste Anschlagsposition durch eine Begrenzung des Kolbenraums 5 auf einer senkrecht zur Längsachse des Kolbenraums 5 verlaufenden ersten Begrenzung (erste Seitenwand) auf einer Seite des Kolbenraums 5 definiert ist und die zweite Anschlagsposition durch eine zweite Begrenzung (zweite Seitenwand) des Kolbenraums 5 auf einer der ersten Begrenzung gegenüberliegenden Seite des Kolbenraums 5 definiert ist.

Wie in den Fig. 1 und 2 dargestellt, besteht der Kolbenraum 5 aus einem ersten Kolbenraumteil 11 und einem zweiten Kolbenraumteil 12. Der erste und zweite Kolbenraumteil 11 und 12 sind verbindbar, beispielsweise mittels Kraft-, Form-, oder Stoffschluss verbindbar, insbesondere über (zerstörungsfrei) voneinander lösbare Verbindungselemente verbindbar. In dem in Fig. 2 dargestellten Ausführungsbeispiel sind der erste und zweite Kolbenraumteil 11 und 12 mittels einem von dem ersten Kolbenraumteil 11 umfassten ersten Verbindungselement 13 und einem von dem zweiten Kolbenraumteil 12 umfassten zweiten Verbindungselement 14 verbunden. Die ineinandergreifende Verbindungselemente 13 und 14 sind jeweils in Form von Widerhaken ausgebildet und bilden eine Schnappverbindung, sodass eine feste und sichere Verbindung gewährleistet ist, die gleichzeitig lösbar und wiederverbindbar ist. Die Verbindungselemente 13 und 14 können ebenfalls als Gewinde ausgebildet sein und eine Schraubverbindung bilden.

Der erste Kolbenraumteil 11 oder der zweite Kolbenraumteil 12 kann den Kolbenraumabschnitt 7 umfassen. Alternativ können der erste Kolbenraumteil 11 und der zweite Kolbenraumteil 12 den Kolbenraumabschnitt 7 jeweils teilweise umfassen. Insbesondere kann der erste Kolbenraumteil 11 die Aufweitung 26 umfassen und der zweite Kolbenraumteil 12 die Verengung 27 umfassen.

Ebenso kann der erste Kolbenraumteil 11 oder der zweite Kolbenraumteil 12 eine die erste Öffnung begrenzende Umlaufkante umfassen. Alternativ können der erste Kolbenraumteil 11 und der zweite Kolbenraumteil 12 die Umlaufkante jeweils teilweise umfassen und nach dem Zusammenfügen des ersten und zweiten Kolbenraumteils 11 und 12 die erste Öffnung jeweils teilweise umfassen bzw. die erste Öffnung bilden.

Insbesondere können das erste Verbindungselement 13 und das zweite Verbindungselement 14, wie in Fig. 2 dargestellt, von dem Kolbenraumabschnitt 7 umfasst sein. Ferner kann das Verbindungselement 13 oder das Verbindungselemente 14 die die erste Öffnung begrenzende Umlaufkante umfassen. Alternativ können das erste Verbindungselement 13 und das zweite Verbindungselement 14 die Umlaufkante jeweils teilweise umfassen und nach dem Zusammenfügen der Verbindungselemente 13 und 14 die erste Öffnung jeweils teilweise umfassen bzw. die erste Öffnung bilden.

Die Zweiteilung des Kolbenraums 5 bietet die Möglichkeit, die Aufweitung 26 und Verengung 27 des lichten Innenmaßes des Kolbenraums 5 mit hoher Präzision bereitzustellen. Dies insbesondere dann, wenn sich der Kolbenraumabschnitt 7 oder ein Teil des Kolbenraumabschnitts 7 am äußeren Rand zumindest eines der Kolbenraumteile 11 und 12 befindet. Dadurch ist eine vereinfachte und präzise Herstellung der Kolbenraumteile 11 und 12 und damit des Kolbenraums 5 gewährleistet.

Der Kolbenraum 5 kann in einem Ausführungsbeispiel (nicht dargestellt) mehrere Kolbenabschnitte 7 umfassen, in denen der Kolbenraum 5 jeweils eine Aufweitung 26 des lichten Innenmaßes und eine Verengung 27 des aufgeweiteten lichten Innenmaßes aufweist. Insbesondere können die mehreren Kolbenabschnitt 7 jeweils eine Öffnung im Kolbenraum, beispielsweise jeweils eine der ersten Öffnung 2, der zweiten Öffnung 3 und der dritten Öffnung 10, umfassen. Eine Öffnung im Kolbenraum 5 ist dabei insbesondere eine Öffnung im Kolbenraummantel.

Der Kolben 4 ist aus der ersten Position in die zweite Position durch Betätigen einer Betätigungsvorrichtung 15 bewegbar und in der zweiten Position arretierbar. Der Kolben 4 ist aus der zweiten Position in die erste Position mittels einer Rückstellvorrichtung 16 bewegbar. Die Rückstellvorrichtung 16 ist beispielsweise ein Federelement.

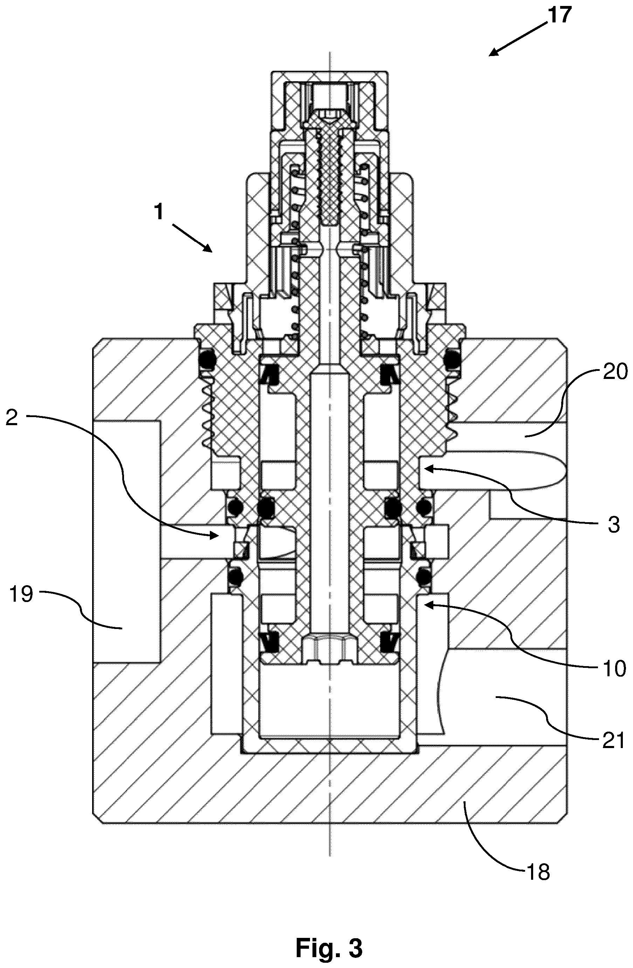

Fig. 3 zeigt ein Umstellsystem umfassend die in den Fig. 1 und 2 dargestellte Umstellvorrichtung 1 und ein Kanalsystem 18 zur Aufnahme der Umstellvorrichtung 1. Die Umstellvorrichtung 1 ist fest mit dem Kanalsystem 18 verbindbar oder verbunden, insbesondere mittels Kraft-, Form- oder Stoffschluss.

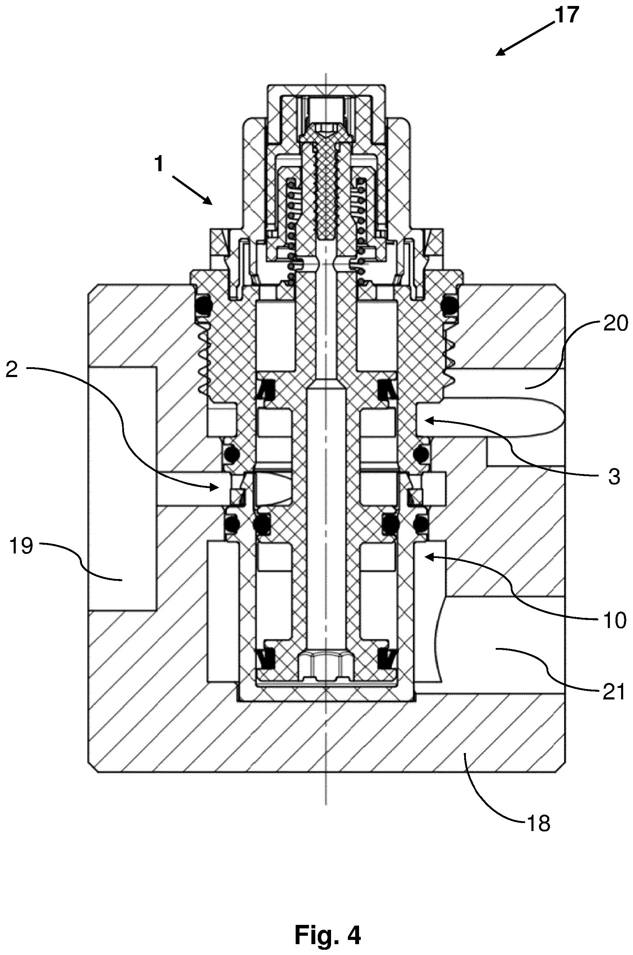

Das Kanalsystem 18 umfasst einen Zulauf 19, einen ersten Ablauf 20 und einen zweiten Ablauf 21. Die Umstellvorrichtung 1 ist derart mit dem Kanalsystem 18 verbunden, dass die erste Öffnung 2 der Umstellvorrichtung 1 mit dem Zulauf 19 fluidisch verbunden ist, die zweiten Öffnung 3 der Umstellvorrichtung 1 mit dem ersten Ablauf 20 fluidisch verbunden ist und die dritte Öffnung 10 der Umstellvorrichtung 1 mit dem zweiten Ablauf 21 fluidisch verbunden ist. Derart ist in der dargestellten ersten Position des Kolbens 4 bzw. der Dichtvorrichtung 6 der Zulauf 19 von dem ersten Ablauf 20 fluidisch getrennt und mit dem zweiten Ablauf 21 fluidisch verbunden. Auf ähnliche Weise ist in einer zweiten Position (siehe Fig. 4) des Kolbens 4 bzw. der Dichtvorrichtung 6 der Zulauf 19 von dem zweiten Ablauf 21 fluidisch getrennt und mit dem ersten Ablauf 20 fluidisch verbunden.

Fig. 4 zeigt das mit 17 bezeichnete Umstellsystem aus Fig. 3 mit dem Kolben 4 in der zweiten Position. Gleiche Merkmale sind mit gleichen Bezugszeichen versehen.

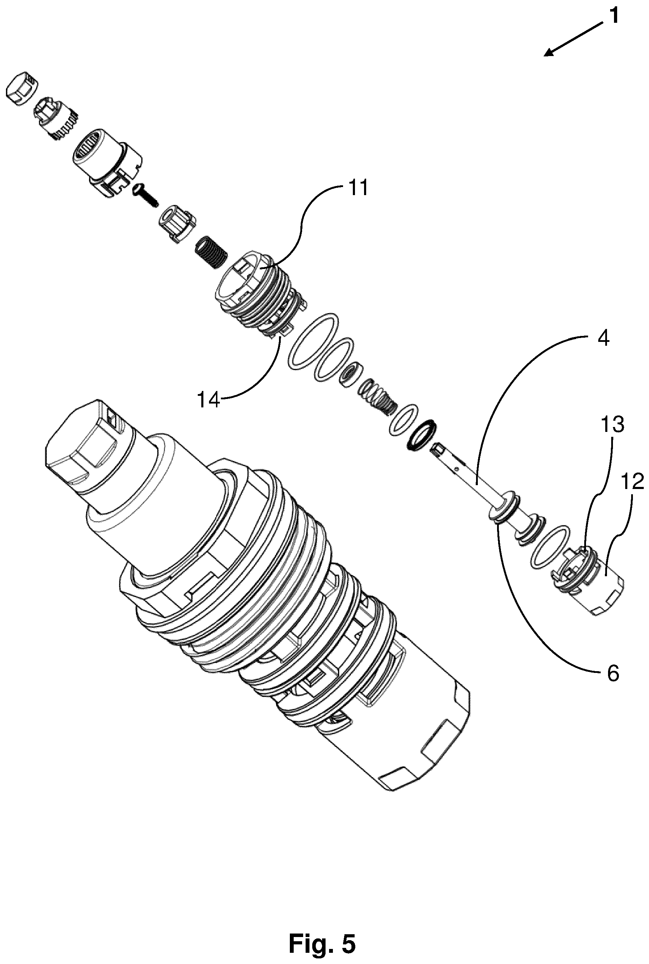

Fig. 5 zeigt eine räumliche Darstellung und eine Explosionsdarstellung der mit 1 bezeichneten Umstellvorrichtung aus den Fig. 1 und 2. Gleiche Merkmale sind mit gleichen Bezugszeichen versehen.

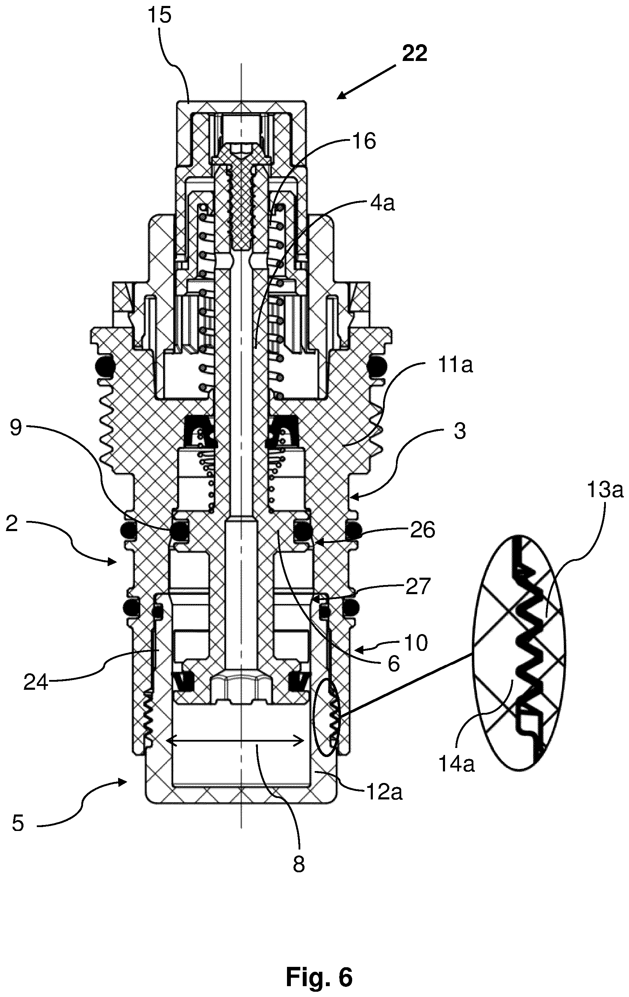

Fig. 6 zeigt eine mit 22 bezeichnete monostabile Umstellvorrichtung gemäß einem zweiten Ausführungsbeispiel. Die Umstellvorrichtung 22 ist ähnlich der Umstellvorrichtung 1. Insofern wird auf die obige Beschreibung verwiesen. Gleiche oder ähnliche Merkmale sind dabei mit gleichen Bezugszeichen versehen. Ein Unterschied zu der Umstellvorrichtung 1 besteht darin, dass die Umstellvorrichtung 22 einen ersten Kolbenraumteil 11a und einen zweiten Kolbenraumteil 12a aufweist, wobei der erste Kolbenraumteil 11a eine Hülse 24 zur Aufnahme des zweiten Kolbenraumteils 12a umfasst.

Der erste und der zweite Kolbenraumteil 11a und 12a sind über eine Schraubverbindung verbindbar oder verbunden. Der erste Kolbenraumteil 11a umfasst ein erstes Verbindungselement 13a, hier ein Schraubengewinde. Die Hülse 24 des zweiten Kolbenraumteils 12a umfasst ein zweites Verbindungselement 14a, hier ein Hülsengewinde. Das erste und zweite Verbindungselement 13a und 14a sind außerhalb des Kolbenraumabschnitts 7, insbesondere außerhalb des aufgeweiteten Abschnitts, angeordnet.

Die Hülse 24 erstreckt sich von dem Verbindungselement 14a bis zum aufgeweiteten Abschnitt des Kolbenraumabschnitts 7. Der erste Kolbenraumteil 11a umfasst den aufgeweiteten Abschnitt, der aufgeweitete Abschnitt wird von der Hülse 24 begrenzt. Der erste und der zweite Kolbenraumabschnitt 11a und 12a umfassen jeweils die Aufweitung 26 oder die Verengung 27 des Innenmaßes des Kolbenraums 5. Im gezeigten Ausführungsbeispiel umfasst der erste Kolbenraumteil 11a die Aufweitung 26 und der zweite Kolbenraumteil 12a die Verengung 27. Der erste Kolbenraumteil 11a umfasst den aufgeweiteten Abschnitt im Kolbenraumabschnitt 7, die erste Öffnung 2 und die zweite Öffnung 3. Der erste und der zweite Kolbenraumteil 11a und 12a umfassen die dritte Öffnung 10.

Korrespondierend zu der dritten Öffnung 10 weist die Hülse 24 eine Durchlassöffnung 25 auf, um einen Auslass oder Einlass zu bilden.

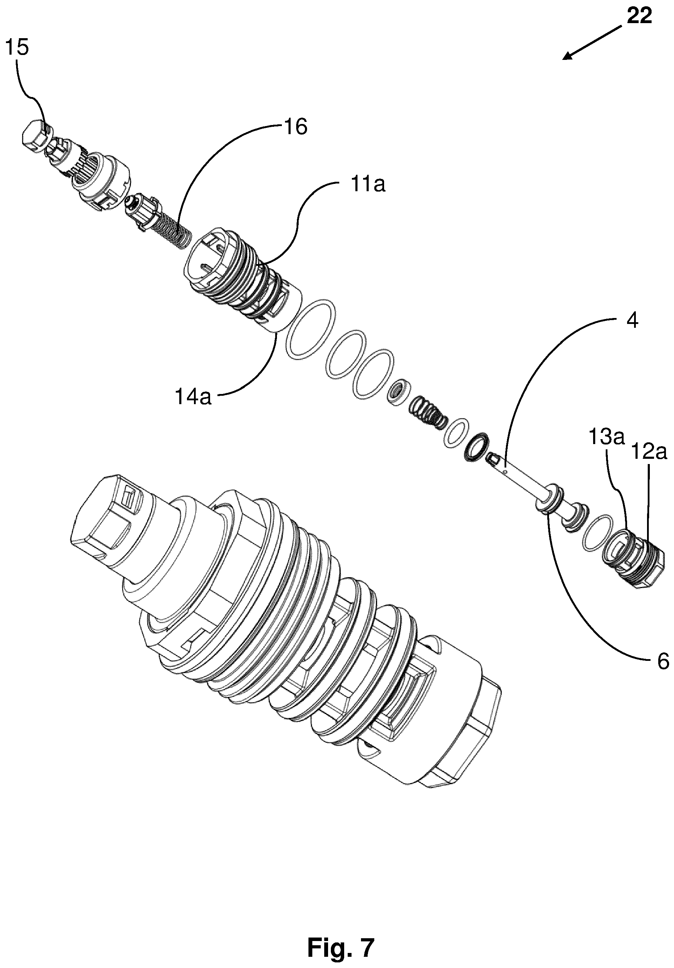

Fig. 7 zeigt eine räumliche Darstellung und eine Explosionsdarstellung der mit 22 bezeichneten Umstellvorrichtung aus Fig. 6. Gleiche Merkmale sind mit gleichen Bezugszeichen versehen.

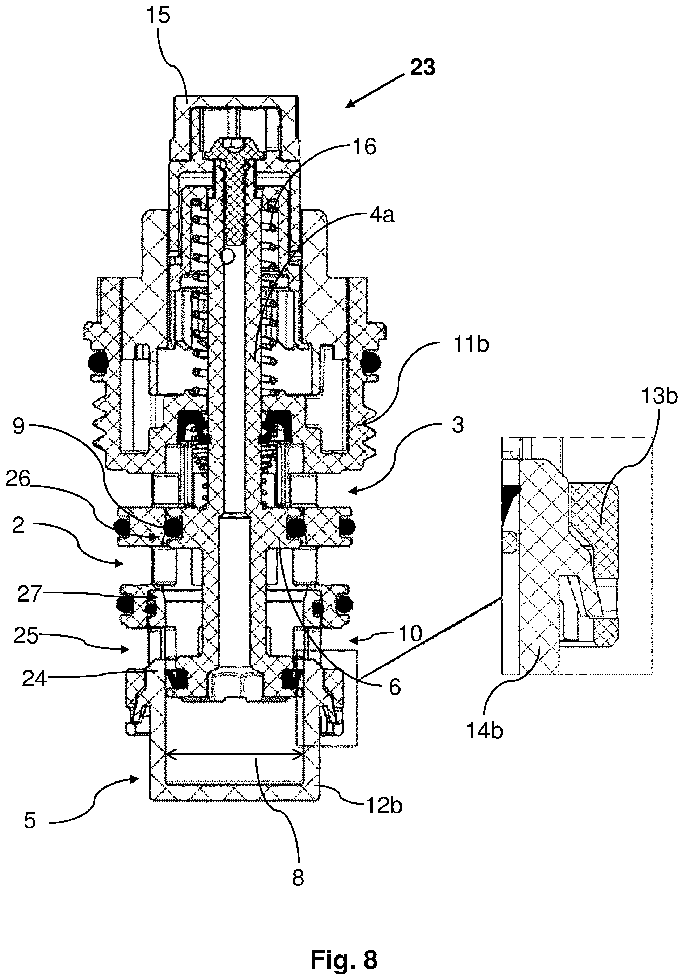

Fig. 8 zeigt eine mit 23 bezeichnete monostabile Umstellvorrichtung gemäß einem dritten Ausführungsbeispiel. Die Umstellvorrichtung 23 ist ähnlich der Umstellvorrichtung 22 und der Umstellvorrichtung 1. Insofern wird auf die obige Beschreibung verwiesen. Gleiche oder ähnliche Merkmale sind mit gleichen Bezugszeichen versehen. Die Umstellvorrichtung 23 weist einen ersten Kolbenraumteil 11b und einen zweiten Kolbenraumteil 12b auf, wobei der erste Kolbenraumteil 11b eine Hülse 24 zur Aufnahme des zweiten Kolbenraumteils 12b umfasst.

Ein Unterschied zu der Umstellvorrichtung 22 besteht darin, dass der erste und der zweite Kolbenraumteil 11b und 12b über eine Schnappverbindung verbindbar oder verbunden sind. Der erste Kolbenraumteil 11b umfasst ein erstes Verbindungselement 13b, die Hülse 24 des zweite Kolbenraumteils 12b umfasst ein zweites Verbindungselement 14b. Das erste Verbindungselement 13b umfasst einen Schnapphaken, der in einer Aussparung, insbesondere einem Hinterschnitt, des zweiten Verbindungselements 14b im verbundenen Zustand der Kolbenraumteile 11b und 12b einrastet. Das erste und zweite Verbindungselement 13b und 14b sind außerhalb des Kolbenraumabschnitts 7, insbesondere außerhalb des aufgeweiteten Abschnitts, angeordnet.

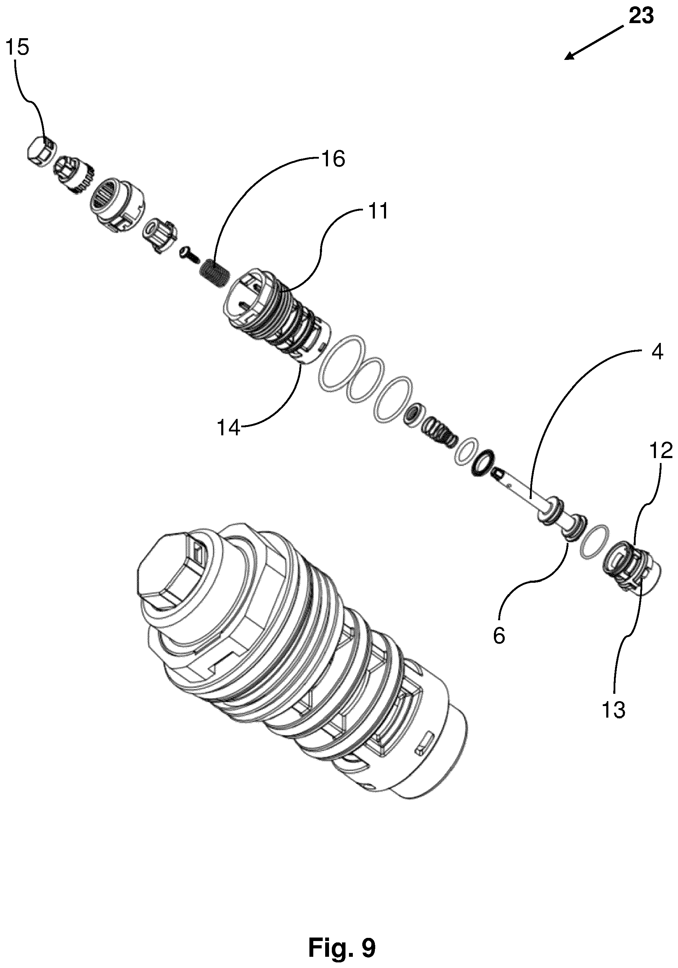

Fig. 9 zeigt eine räumliche Darstellung und eine Explosionsdarstellung der mit 23 bezeichneten Umstellvorrichtung aus Fig. 6. Gleiche Merkmale sind mit gleichen Bezugszeichen versehen.

### Bezugszeichenliste

- 1: Bistabile Umstellvorrichtung nach dem ersten Ausführungsbeispiel
- 2: erste Öffnung
- 3: zweite Öffnung
- 4: Kolben der bistabilen Umstellvorrichtung nach dem ersten Ausführungsbeispiel
- 4a: Kolben der monostabilen Umstellvorrichtung nach dem zweiten und dritten Ausführungsbeispiel
- 5: Kolbenraum
- 6: Dichtvorrichtung
- 7: Kolbenraumabschnitt
- 8: lichter Innendurchmesser des Kolbenraums
- 9: elastischer Dichtring
- 10: dritte Öffnung
- 11: erster Kolbenraumteil nach dem ersten Ausführungsbeispiel
- 11a: erster Kolbenraumteil nach dem zweiten Ausführungsbeispiel
- 11b: erster Kolbenraumteil nach dem dritten Ausführungsbeispiel
- 12: zweiter Kolbenraumteil nach dem ersten Ausführungsbeispiel
- 12a: zweiter Kolbenraumteil nach dem zweiten Ausführungsbeispiel
- 12b: zweiter Kolbenraumteil nach dem dritten Ausführungsbeispiel
- 13: erstes Verbindungselement nach dem ersten Ausführungsbeispiel
- 13a: erstes Verbindungselement nach dem zweiten Ausführungsbeispiel
- 13b: erstes Verbindungselement nach dem dritten Ausführungsbeispiel
- 14: zweites Verbindungselement nach dem ersten Ausführungsbeispiel
- 14a: zweites Verbindungselement nach dem zweiten Ausführungsbeispiel
- 14b: zweites Verbindungselement nach dem dritten Ausführungsbeispiel
- 15: Betätigungsvorrichtung
- 16: Rückstellvorrichtung
- 17: Umstellsystem
- 18: Kanalsystem
- 19: Zulauf
- 20: erster Ablauf
- 21: zweiter Ablauf
- 22: Monostabile Umstellvorrichtung nach dem zweiten Ausführungsbeispiel
- 23: Monostabile Umstellvorrichtung nach dem dritten Ausführungsbeispiel
- 24: Hülse
- 25: Durchlassöffnung
- 26: Aufweitung
- 27: Verengung

## Patentansprüche

1. Umstellvorrichtung (1) zum selektiven Verbinden einer ersten Öffnung (2) mit einer zweiten Öffnung (3), die Umstellvorrichtung (1) umfassend einen Kolben (4) und einen Kolbenraum (5) zur Aufnahme des Kolbens (4), der Kolbenraum (5) umfassend zumindest die erste Öffnung (2),
wobei der Kolben (4) eine Dichtvorrichtung (6) umfasst, die einen elastischen Dichtring (9) umfasst und die an der ersten Öffnung (2) vorbei bewegbar ist,
wobei der Kolbenraum (5) in einem Kolbenraumabschnitt (7) eine Aufweitung (26) eines lichten Innenmaßes, insbesondere eines Innendurchmessers (8), des Kolbenraums (5) und eine Verengung (27) des aufgeweiteten lichten Innenmaßes aufweist, wobei die Dichtvorrichtung (6) mit ihrem elastischen Dichtring (9) über die Aufweitung (26) und über die Verengung (27) hinweg bewegbar ist,
wobei der Kolbenraum (5) einen ersten Kolbenraumteil (11) und einen mit dem ersten Kolbenraumteil (11) zusammenfügbaren zweiten Kolbenraumteil (12) umfasst, wobei die Aufweitung (26) an dem ersten Kolbenraumteil (11) ausgebildet ist und die Verengung an dem zweiten Kolbenraumteil (12) ausgebildet ist, und wobei der erste Kolbenraumteil (11) und der zweite Kolbenraumteil (12) den Kolbenraumabschnitt (7) jeweils teilweise umfassen, **dadurch gekennzeichnet, dass**
in einer ersten Position der Dichtvorrichtung (6) die erste Öffnung (2) von der zweiten Öffnung (3) fluidisch getrennt ist und in einer zweiten Position der Dichtvorrichtung (6) die erste Öffnung (2) mit der zweiten Öffnung (3) fluidisch verbunden ist, und
in der ersten Position der Dichtvorrichtung (6) die erste Öffnung (2) mit einer dritten Öffnung (10) fluidisch verbunden ist und in der zweiten Position der Dichtvorrichtung (6) die erste Öffnung (2) von der dritten Öffnung (10) fluidisch getrennt ist.

2. Umstellvorrichtung nach Anspruch 1, **dadurch gekennzeichnet, dass**
der Kolbenraumabschnitt (7) die erste Öffnung (2) umfasst.

3. Umstellvorrichtung nach einem der vorhergehenden Ansprüche, **dadurch gekennzeichnet, dass**
die erste Öffnung zwischen der Aufweitung (26) und der Verengung (27) angeordnet ist.

4. Umstellvorrichtung nach einem der vorhergehenden Ansprüche, **dadurch gekennzeichnet, dass**
der Kolbenraum (5) vor und hinter dem Kolbenraumabschnitt (7) das lichte Innenmaß aufweist.

5. Umstellvorrichtung nach einem der vorhergehenden Ansprüche, **dadurch gekennzeichnet, dass**
die Dichtvorrichtung (6) einen elastischen O-Ring umfasst.

6. Umstellvorrichtung nach einem der vorhergehenden Ansprüche, **dadurch gekennzeichnet, dass**
sich das lichte Innenmaß des Kolbenraums (5) innerhalb des Kolbenraumabschnitts (7) gleichmäßig, insbesondere kontinuierlich, ändert.

7. Umstellvorrichtung nach einem der vorhergehenden Ansprüche, **dadurch gekennzeichnet, dass**
der erste Kolbenraumteil (11) oder der zweite Kolbenraumteil (12) die erste Öffnung (2) zumindest teilweise umfasst, oder
der erste Kolbenraumteil (11) und der zweite Kolbenraumteil (12) die erste Öffnung (2) jeweils teilweise umfassen.

8. Umstellvorrichtung nach einem der vorhergehenden Ansprüche, **dadurch gekennzeichnet, dass** der erste Kolbenraumteil (11) eine Hülse (24) zur Aufnahme des zweiten Kolbenraumteils (12) umfasst.

9. Umstellvorrichtung nach Anspruch 8, **dadurch gekennzeichnet, dass** die Hülse (24) die Aufweitung (26) und/oder die Verengung (27) begrenzt.

10. Umstellvorrichtung nach einem der vorhergehenden Ansprüche, **dadurch gekennzeichnet, dass** der erste Kolbenraumteil (11) ein erstes Verbindungselement (13a) umfasst und der zweite Kolbenraumteil (12) ein zweites Verbindungselement (14a) umfasst zur, insbesondere lösbaren, Verbindung des ersten Kolbenraumteils (13) mit dem zweiten Kolbenraumteil (14), wobei das erste und zweite Verbindungselement (13a, 14a) außerhalb des Kolbenraumabschnitts (7) angeordnet sind.

## Claims

1. Switchover device (1) for selectively connecting a first opening (2) to a second opening (3), the switchover device (1) comprising a piston (4) and a piston chamber (5) for receiving the piston (4), the piston chamber (5) comprising at least the first opening (2),
wherein the piston (4) comprises a sealing device (6) which comprises an elastic sealing ring (9) and which is movable past the first opening (2), wherein the piston chamber (5) has, in a piston chamber section (7), a widening (26) of a clear internal dimension, in particular an internal diameter (8), of the piston chamber (5) and a narrowing (27) of the widened clear internal dimension,
wherein the sealing device (6) is movable with its elastic sealing ring (9) across the widening (26) and across the narrowing (27),
wherein the piston chamber (5) comprises a first piston chamber part (11) and a second piston chamber part (12) which can be joined to the first piston chamber part (11), wherein the widening (26) is formed on the first piston chamber part (11) and the narrowing is formed on the second piston chamber part (12), and wherein the first piston chamber part (11) and the second piston chamber part (12) each partially enclose the piston chamber section (7), **characterized in that**
in a first position of the sealing device (6), the first opening (2) is fluidically separated from the second opening (3), and in a second position of the sealing device (6), the first opening (2) is fluidically connected to the second opening (3), and
in the first position of the sealing device (6), the first opening (2) is fluidically connected to a third opening (10) and in the second position of the sealing device (6), the first opening (2) is fluidically separated from the third opening (10).

2. Switchover device according to claim 1, **characterized in that** the piston chamber section (7) comprises the first opening (2).

3. Switchover device according to one of the preceding claims, **characterized in that**
the first opening is arranged between the widening (26) and the narrowing (27).

4. Switchover device according to one of the preceding claims, **characterized in that**
the piston chamber (5) has the clear internal dimension in front of and behind the piston chamber section (7).

5. Switchover device according to one of the preceding claims, **characterized in that**
the sealing device (6) comprises an elastic O-ring.

6. Switchover device according to one of the preceding claims, **characterized in that**
the clear internal dimension of the piston chamber (5) changes uniformly, in particular continuously, within the piston chamber section (7).

7. Switchover device according to one of the preceding claims, **characterized in that**
the first piston chamber part (11) or the second piston chamber part (12) at least partially encloses the first opening (2), or
the first piston chamber part (11) and the second piston chamber part (12) each partially enclose the first opening (2).

8. Switchover device according to one of the preceding claims, **characterized in that** the first piston chamber part (11) comprises a sleeve (24) for receiving the second piston chamber part (12).

9. Switchover device according to claim 8, **characterized in that** the sleeve (24) limits the widening (26) and/or the narrowing (27).

10. Switchover device according to one of the preceding claims, **characterized in that** the first piston chamber part (11) comprises a first connecting element (13a) and the second piston chamber part (12) comprises a second connecting element (14a) for connecting, in particular detachably, the first piston chamber part (13) to the second piston chamber part (14), wherein the first and second connecting elements (13a, 14a) are arranged outside the piston chamber section (7).

## Revendications

1. Dispositif de commutation (1) pour la mise en communication sélective d'une première ouverture (2) avec une deuxième ouverture (3), lequel dispositif de commutation (1) comprend un piston (4) et une chambre de piston (5) destinée à recevoir le piston (4), la chambre de piston (5) contenant au moins la première ouverture (2),
dans lequel le piston (4) comprend un dispositif d'étanchéité (6) qui comprend un joint d'étanchéité élastique (9) et qui peut être déplacé devant la première ouverture (2),
dans lequel la chambre de piston (5) présente dans une section de chambre de piston (7) un élargissement (26) d'une dimension intérieure libre de la chambre de piston (5), en particulier d'un diamètre intérieur (8), et un resserrement (27) de la dimension intérieure élargie, le dispositif d'étanchéité (6) pouvant être déplacé avec son joint d'étanchéité élastique (9) au-delà de l'élargissement (26) et du resserrement (27),
dans lequel la chambre de piston (5) comprend une première partie de chambre de piston (11) et une deuxième partie de chambre de piston (12) pouvant être assemblée avec la première partie de chambre de piston (11), l'élargissement (26) étant formé sur la première partie de chambre de piston (11) et le resserrement sur la deuxième partie de chambre de piston (12), et dans lequel la première partie de chambre de piston (11) et la deuxième partie de chambre de piston (12) comprennent chacune en partie la section de chambre de piston (7),
**caractérisé en ce que**
dans une première position du dispositif d'étanchéité (6), la première ouverture (2) est séparée de la deuxième ouverture (3) du point de vue de la circulation du fluide et, dans une deuxième position du dispositif d'étanchéité (6), la première ouverture (2) communique avec la deuxième ouverture (3) pour la circulation du fluide et
dans la première position du dispositif d' étanchéité (6), la première ouverture (2) communique ave une troisième ouverture (10) pour la circulation du fluide et, dans la deuxième position du dispositif d'étanchéité (6), la première ouverture (2) est séparée de la troisième ouverture (10) du point de vue de la circulation du fluide.

2. Dispositif de commutation selon la revendication 1, **caractérisé en ce que** la section de chambre de piston (7) comprend la première ouverture (2).

3. Dispositif de commutation selon l'une des revendications précédentes, **caractérisé en ce que** la première ouverture est disposée entre l'élargissement (26) et le resserrement (27).

4. Dispositif de commutation selon l'une des revendications précédentes, **caractérisé en ce que** la chambre de piston (5) présente la dimension intérieure libre en amont et en aval de la section de chambre de piston (7).

5. Dispositif de commutation selon l'une des revendications précédentes, **caractérisé en ce que** le dispositif d'étanchéité (6) comprend un joint torique élastique.

6. Dispositif de commutation selon l'une des revendications précédentes, **caractérisé en ce que** la dimension intérieure libre de la chambre de piston (5) change à l'intérieur de la section de chambre de piston (7) de façon régulière, en particulier continue.

7. Dispositif de commutation selon l'une des revendications précédentes, **caractérisé en ce que** la première partie de chambre de piston (11) ou la deuxième partie de chambre de piston (12) comprend au moins en partie la première ouverture (2) ou
la première partie de chambre de piston (11) et la deuxième partie de chambre de piston (12) comprennent chacune en partie la première ouverture (2).

8. Dispositif de commutation selon l'une des revendications précédentes, **caractérisé en ce que** la première partie de chambre de piston (11) comprend une douille (24) destinée à recevoir la deuxième partie de chambre de piston (12).

9. Dispositif de commutation selon la revendication 8, **caractérisé en ce que** la douille (24) délimite l'élargissement (26) et/ou le resserrement (27).

10. Dispositif de commutation selon l'une des revendications précédentes, **caractérisé en ce que** la première partie de chambre de piston (11) comprend un premier élément d'assemblage (13a) et la deuxième partie de chambre de piston (12) comprend un deuxième élément d'assemblage (14a) pour l'assemblage, en particulier pouvant être défait, de la première partie de chambre de piston (13) avec la deuxième partie de chambre de piston (14), le premier élément d'assemblage et le deuxième (13a, 14a) étant disposés à l'extérieur de la section de chambre de piston (7).
